# EUROPÄISCHE PATENTSCHRIFT

(11) **EP 1 881 925 B1**
(45) Veröffentlichungstag und Bekanntmachung des Hinweises auf die Patenterteilung: **17.09.2008**
(21) Anmeldenummer: 06724378.2
(22) Anmeldetag: 18.04.2006
(51) Int. Cl.: B62D 7/09

(54) **VORRICHTUNG UND VERFAHREN ZUR LENKUNG VON RÄDERN EINES FAHRZEUGES MIT ACHSSCHENKELLENKUNG**
DEVICE AND METHOD FOR STEERING WHEELS OF A VEHICLE WITH AXLE PIVOT STEERING
DISPOSITIF ET PROCEDE POUR DIRIGER DES ROUES D'UN VEHICULE AVEC UNE DIRECTION A FUSEE

(30) Priorität: 20.05.2005 DE 102005023287
(43) Veröffentlichungstag der Anmeldung: 30.01.2008
(73) Patentinhaber: ZF FRIEDRICHSHAFEN AG, 88038 Friedrichshafen (DE)
(72) Erfinder: KRUBER, Klaus, 94550 Künzing (DE); WALLNER, Stefan, 88046 Friedrichshafen (DE)
(86) Internationale Anmeldenummer: PCT/EP2006/003512
(87) Internationale Veröffentlichungsnummer: WO 2006/122622

(56) Entgegenhaltungen:
- DE-U- 7 121 906
- US-B1- 6 283 483

## Beschreibung

Die Erfindung betrifft eine Vorrichtung und ein Verfahren zur Lenkung von Rädern eines Fahrzeugs mit Achsschenkellenkung gemäß dem Oberbegriff des Patentanspruchs 1 beziehungsweise des Anspruchs 12.

Es ist allgemein bekannt, dass sich Radfahrzeuge nach vier grundsätzlich unterschiedlichen Prinzipien lenken lassen. Bei der sogenannten Knicklenkung sind die Räder des Fahrzeugs relativ zu den sie tragenden Fahrzeugteilen nicht schwenkbar, sondern es ist etwa in der Fahrzeugmitte eine Gelenkstelle vorgesehen, um welche das Vorderfahrzeug gegen das Hinterfahrzeug verschwenkt werden kann. Sie zeichnet sich durch sehr kleine mögliche Wendekreise aus, und hat sich für bestimmte Baustellenfahrzeuge wie etwa Radlader bewährt. Die Grundgestaltung des Fahrzeugs muss jedoch vollständig auf diesen Lenkungstyp abgestimmt sein, weshalb dieser nur für bestimmte Spezialfahrzeuge zum Einsatz gelangt.

Daneben ist es bekannt, die Räder einzeln mit gewünschten Drehzahlen anzutreiben und so das Fahrverhalten von Kettenfahrzeugen nachzuahmen. Diese Lenkungsart erfordert jedoch einen hohen Aufwand für einzeln nach Drehrichtung und Drehzahl antreibbare Räder und führt zu starken Gleitbewegungen der Radaufstandsflächen auf dem Untergrund und damit zu hohem Verschleiß der Reifen.

Fahrzeuge mit angelenkten Rädern werden nach dem Prinzip der Achsschenkellenkung oder der Drehschemellenkung gelenkt. Bei der seit dem Altertum bekannten Drehschemellenkung werden die gelenkten Räder einer Achse durch eine Verschwenkung der gesamten Achse um einen Drehpunkt auf Höhe der Fahrzeuglängsachse gedreht. Diese Art der Lenkung ist insbesondere bei zweiachsigen Anhängern häufig anzutreffen und stellt wegen der Koaxialität der Radachsen der gelenkten Fahrzeugachse auf konstruktiv besonders einfache Weise sicher, dass die sogenannte Ackermannsche Bedingung erfüllt ist, nach der sich die verlängerten Radachsen der Fahrzeugachsen in einem Punkt treffen müssen, um ein Gleiten der Räder auf dem Untergrund zu vermeiden. Im Fall eines Fahrzeugs mit einer ungelenkten Hinterachse und einer nach dem Drehschemelprinzip gelenkten Vorderachse ist dieser Punkt der Schnittpunkt der Verlängerung der Hinterachse mit der Verlängerung der Radachsen der Vorderachse. Anschaulich bedeutet dies, dass sämtliche Räder eine Kreisbahn um diesen Schnittpunkt beschreiben. Dementsprechend klein sind der Verschleiß der Bereifung und die Kräfte auf die Radaufhängung.

Die Drehschemellenkung benötigt allerdings zum Verschwenken der gesamten gelenkten Achse gegen die Längsachse des Fahrzeugs für starke Lenkeinschläge einen sehr großen Bauraum. Zudem wandert der Aufstandspunkt der Räder auf dem Untergrund mit zunehmendem Lenkeinschlag stark in Richtung zur Längsachse des Fahrzeugs, woraus sich eine erhebliche Kippneigung ergeben kann. Aufgrund dieser gravierenden Nachteile wird die Drehschemellenkung bei aktiv gelenkten Fahrzeugen nur vereinzelt eingesetzt.

Die Achsschenkellenkung ist als Einzelradlenkung nicht auf die Verschwenkung der gesamten gelenkten Achse angewiesen, beansprucht gegenüber der Drehschemellenkung daher einen geringeren Bauraum und zeichnet sich durch eine geringere Kippneigung bei starken Lenkeinschlägen aus. Jedoch ist zu beachten, dass der Lenkeinschlag des kurveninneren Rades gegenüber der Fahrzeuglängsachse bei Kurvenfahrt größer sein muss als der Lenkeinschlag des kurvenäußeren Rades, um ein Drehen um einen gemeinsamen Punkt gemäß der Ackermannschen Bedingung zu ermöglichen. Seit den ersten Tagen des Automobils wurde dies durch mechanische Vorrichtungen bewerkstelligt, wie beispielsweise die Patentschrift DE 73515 belegt.

Der Ackermannsche Winkel, also die Winkelabweichung der Radachsen der gelenkten Räder einer Achse von einander, die ein Abrollen der Räder um einen gemeinsamen Kurvenmittelpunkt ermöglicht, kann für Fahrzeuge mit einer gelenkten und einer ungelenkten Achse durch gelenkig verbundene, starre Vorrichtungen leicht zumindest mit ausreichender Genauigkeit eingestellt werden. Dagegen ist dieser bei zwei oder mehr gelenkten Achsen für jede Achse jeweils von der Lenkstellung der jeweils anderen Achse(n) abhängig. Aus diesem Grund wurde für Baustellenfahrzeuge zum Teil eine Vierradlenkung für den Baustellenbetrieb und eine Zweiradlenkung mit in Geradeausstellung fixierten Hinterradachsen für den Betrieb auf Straßen vorgesehen. Die Lenkgeometrie kann auf diese Weise auf den Straßenbetrieb ausgelegt werden, um den Anforderungen an das Fahrverhalten bei höheren Geschwindigkeiten auf öffentlichen Straßen zu genügen. Dies ist jedoch unbefriedigend, da im Baustellenbetrieb, der häufig der vorherrschende Betriebsmodus ist, ein erheblicher Lenkwinkelfehler und dadurch bedingt ein stark erhöhter Verschleiß an Bereifung und Fahrwerksteilen in Kauf genommen werden muss. Zudem ist gerade bei relativ großen Fahrzeugen eine Vierrad- bzw. Mehrachslenkung auch im Straßenverkehr in Hinblick auf eine verbesserte Manövrierbarkeit wünschenswert.

Häufig ist darüber hinaus ein gewisser Lenkwinkelfehler, also die Abweichung der Radachsen der gelenkten Räder einer Fahrzeugachse vom Ackermannschen Winkel, erwünscht oder geradezu notwendig, um gute Fahreigenschaften, wie beispielsweise einen kleineren Wendekreis, zu erzielen. Aus diesem Grund wird im Folgenden neben dem Begriff Lenkwinkelfehler der Begriff Lenkwinkelabweichung verwendet, womit eine gewünschte Lenkwinkelabweichung gemeint ist, während der Begriff Lenkwinkelfehler für unerwünschte Lenkwinkelabweichungen vom Ackermannschen Winkel verwendet wird.

Eine variable Einstellung der Lenkwinkelabweichung ist zur Einstellung unterschiedlichen Fahrverhaltens bei Kurvenfahrt vorteilhaft, lässt sich mit den herkömmlichen Anordnungen aus gelenkig verbundenen starren Bauteilen jedoch nicht oder nur unter erheblichem Aufwand realisieren. Aus diesem Grund wird die Lenkwinkelabweichung bisher zumeist für einen typischen Betriebsfall ausgelegt, während sie für andere Betriebsfälle oder auch extreme Lenkwinkel nicht optimal ist.

Es besteht daher ein Bedarf für eine Vorrichtung zur Anlenkung und ein Verfahren zur Steuerung von gelenkten Rädern eines Fahrzeugs mit Achsschenkellenkung, durch welche die Lenkwinkelabweichung während des Betriebes eingestellt bzw. verändert werden kann.

Eine Vorrichtung, die dieses ermöglicht, ist sowohl in der DE7121906U als auch in der unveröffentlichten DE 10 2004 053 727 der Anmelderin beschrieben. Diese geht von einem Fahrzeug mit wenigstens einer durch Achsschenkellenkung lenkbaren Fahrzeugachse aus. Ein Hauptlenkzylinder betätigt dabei eine Kolbenstange, welche jeweils auf eine Spurstange wirkt, die den Einschlag des zugeordneten Radträgers bewirkt. Dabei ist eine zusätzliche Lenkkinematik vorgesehen, welche ihrerseits eine Schwenkbewegung der Räder zueinander bewirken kann, wobei eine Überlagerung der Bewegung der Kolbenstange durch den Hauptlenkzylinder und der Bewegung durch die zusätzliche Lenkkinematik so geschieht, dass der sich ergebende Lenkwinkelfehler minimal ist.

Hierfür können die Spurstangenlängen und/oder die effektive Länge der Kolbenstange bzw. der Teilkolbenstangen einer geteilten Kolbenstange längenveränderlich ausgebildet sein. Die Längenveränderung kann beispielsweise durch einen teleskopartigen Hydraulikzylinder oder mit Hilfe von Gewindespindeln erfolgen.

Im Folgenden soll der Begriff der Kolbenstange auch eine Anordnung aus zwei baulich getrennten Teilkolbenstangen umfassen, welche jedoch nach außen als eine längenveränderliche Kolbenstange wirken. Die Länge einer Kolbenstange soll stets die effektive oder im Sinne einer Wirkung auf die Stellung der Radachsen wirksame Länge einer Kolbenstange bezeichnen.

Die Vorrichtung gemäß der DE 10 2004 053 727 ist in der Lage, die gestellte Aufgabe zufriedenstellend zu lösen, wobei insbesondere die letztgenannte Ausführungsform den Vorteil bietet, dass die Längenänderung wie üblich durch eine hydraulische Ansteuerung bewirkt werden kann. Zudem kann der Mechanismus zur Längenänderung im Bereich des Hauptlenkzylinders konzentriert werden. Probleme, die sich ansonsten in Hinblick auf notwendigen Bauraum für weitere aktive Elemente im Bereich der Spurstange, auf die Verkabelung oder das Verlegen von Hydraulikleitungen ergeben und insbesondere Probleme in bezug auf eine Anfälligkeit der zusätzlichen Verstellelemente gegen Verschmutzung und Beschädigung durch Bodenberührungen können so auf eine elegante Art konstruktiv vermieden werden.

Die DE 10 2004 053 727 trifft allerdings keine Aussage über die Ausgestaltung des Hauptlenkzylinders mit integrierter Vorrichtung zur Veränderung der wirksamen Länge der Kolbenstange und über die Art der Ansteuerung des Hauptlenkzylinders.

Vor diesem Hintergrund liegt der Erfindung die Aufgabe zugrunde, eine Vorrichtung und ein Verfahren zur Anlenkung von Rädern eines Fahrzeugs mit Achsschenkellenkung vorzustellen, bei welchen durch eine im Betrieb des Fahrzeugs veränderliche wirksame Länge der Kolbenstange die Lenkwinkelabweichung einstellbar ist und sich insbesondere der Lenkwinkelfehler auf kleine Werte einstellen oder ganz vermeiden lässt. Dabei sollen die Elemente zur Einstellung des Lenkwinkelfehlers bzw. der Lenkwinkelabweichung baulich in den Hauptlenkzylinder integriert sein. Der Aufbau soll dabei konstruktiv möglichst einfach und robust ausgestaltet sein, jedoch einen weiten Verstellbereich ermöglichen. Dabei soll trotz des angestrebten großen Einstellbereiches ein Anschlagen der Räder am Radkasten oder eine sonstige unzulässig große Auslenkung der Räder inhärent vermieden werden, ohne jedoch den.möglichen Lenkwinkel unnötig weit einzuschränken. Ferner soll die Regelung zur Veränderung der Länge der Kolbenstange für Links- und Rechtskurven jeweils zu gleichem bzw. spiegelbildlichem Fahrverhalten führen und eine kontrollierte sowie stufenlose Einstellung der Lenkwinkelabweichung ermöglichen.

Die Lösung dieser Aufgabe ergibt sich aus den Merkmalen der unabhängigen Ansprüche, während vorteilhafte Ausgestaltungen und Weiterbildungen der Erfindung den Unteransprüchen entnehmbar sind.

Der Erfindung liegt die Erkenntnis zugrunde, dass ein an sich bekannter Hydraulikzylinder mit drei Ölkammern in idealer Weise den oben beschriebenen Anforderungen gerecht wird, wenn die mittlere Ölkammer bzw. Teilölkammer zur Veränderung der Länge der Kolbenstange genutzt wird, während die äußeren Ölkammern zur axialen Verstellung der Kolbenstange als ganzes verwendet werden.

Weiter liegt der Erfindung die Erkenntnis zu Grunde, dass eine Regelung der Lenkwinkelabweichung besonders einfach dadurch bewirkt werden kann, dass die aktuellen Lenkwinkel der gelenkten Räder einer Achse erfasst werden und ausgehend von einem Rad der Solllenkwinkel des anderen Rades ermittelt wird. Dieser Solllenkwinkel wird dann über einen Regler zur Einstellung der Ölmenge in der mittleren Ölkammer des Hydraulikzylinders verwendet.

Demnach geht die Erfindung von einer Vorrichtung zur Anlenkung von Rädern eines Fahrzeugs mit Achsschenkellenkung an zumindest einer Radachse aus, wobei die Achsschenkellenkung mit einem Hauptlenkzylinder ausgeführt ist, dessen Kolbenstange an beiden Enden mit jeweils einer einem Rad der Fahrzeugachse zugeordneten Spurstange oder Achslenker gelenkig wirkverbunden ist, wobei die Kolbenstange während des Betriebes des Fahrzeuges in der Länge veränderbar ist. Dabei ist es selbstverständlich unerheblich, ob zwischen der Kolbenstange und der Spurstange bzw. dem Achslenker oder Achsschenkel eventuell noch weitere Zwischenelemente eingefügt sind, solange die Bewegung des Endes der Kolbenstange letztendlich zu einer Anlenkung einer Spurstange und/oder eines Achsschenkels führt. Bei bestimmten konstruktiven Ausprägungen kann die Spurstange dabei unbeweglich mit der Kolbenstange verbunden bzw. in diese integriert sein.

Zur Lösung der gestellten Aufgabe ist vorgesehen, dass die Kolbenstange im Bereich des Hauptlenkzylinders in zwei Teilkolbenstangen geteilt ist und der Hauptlenkzylinder ein Dreikammer-Hydraulikzylinder ist, wobei die äußeren Ölkammern zur Umsetzung eines Lenkwinkel-Sollsignals, beispielsweise gegeben durch einen von Hand eingestellten Lenkradwinkel, in einen Lenkwinkel der Räder der Achse vorgesehen sind, und die mittlere Ölkammer der Einstellung einer Abweichung zwischen den Lenkwinkeln der Räder auf unterschiedlichen Seiten der Achse dient.

Dabei ist es möglich und auch sinnvoll, durch eine allgemein bekannte Auslegung der Lenkung dafür zu sorgen, dass bei einem Lenkwinkeleinschlag auch ohne Beteiligung und/oder Verstellung des Volumens der mittleren Ölkammer mit zunehmendem Lenkeinschlag des kurveninneren Rades der Lenkeinschlag des kurvenäußeren Rades zunehmend nacheilt. Dies entspricht in soweit einer üblichen Lenkungsausbildung zur annähernden Einstellung des Ackermannwinkels. Auf diese Weise kann die sich im Betrieb durchschnittlich in der mittleren Ölkammer befindliche Ölmenge klein gehalten werden.

Da die Ausdehnung der mittleren Ölkammer in Richtung der axialen Enden des Hauptlenkzylinders die räumliche Ausdehnung der beiden äußeren Ölkammern und damit den maximalen Verstellweg des Hauptlenkzylinders im Sinne einer primären Lenkfunktion reduziert, kann auf diese Weise bei einer gegebenen Lenkgeometrie und einem gegebenen maximalen mittleren Lenkwinkel die Länge des Hauptlenkzylinders klein gehalten werden.

Um während des Betriebes des Fahrzeugs sowohl eine positive als auch eine negative Lenkwinkelabweichung einstellen zu können, soll die Lenkung bevorzugt so ausgelegt werden, dass sich bei einer kleinstmöglichen Füllung der mittleren Teilölkammer eine Lenkwinkelabweichung im Sinne eines auf einander Zulaufens der Räder ergibt. Es kann aber auch vorgesehen sein, dass die Lenkung so ausgelegt ist, dass bei einer kleinstmöglichen Füllung der mittleren Teilölkammer und bei Geradeausfahrt des Fahrzeugs die Räder parallel zueinander ausgerichtet sind.

Ein potenzielles Problem stellt die Zufuhr bzw. Ableitung des Öls in und aus der mittleren Ölkammer dar, da sich nicht nur deren Größe, sondern in Abhängigkeit vom Lenkwinkel auch deren Ort verändert. Eine mögliche Lösung besteht hier in der Anordnung von recht langen Kolben der Teilkolbenstangen innerhalb des Hauptlenkzylinders, wobei jeweils der äußere Teil der Dichtung dient, während der Teil, welcher der mittleren Ölkammer zugewandt ist, mit ölführenden Rillen versehen ist, die das Öl zu oder aus der mittleren Ölkammer von einer festgelegten seitlichen Zuführung bis in die mittlere Ölkammer transportieren. In einer besonders bevorzugten Ausführungsform der Erfindung erfolgt die Ölzuführung in die mittlere Kammer des Hauptlenkzylinders jedoch durch einen zumindest in zumindest einer Teilkolbenstange befindlichen Ölkanal. Auf diese Weise kann die Gesamtlänge des Hauptlenkzylinders gering gehalten werden.

Zur möglichst nutzbringenden Ansteuerung der vorstehend beschriebenen Vorrichtung kann bevorzugt eine Steuerungseinrichtung zur Steuerung und/oder Regelung eines Ölvolumens und/oder Öldrucks in der mittleren Kammer vorgesehen sein, welcher ein Signal über den aktuellen IST-Lenkwinkel der gelenkten Räder der Achse zugeführt wird. Zudem ist in dieser eine Sollwert-Ermittlungseinheit vorgesehen, welche mit Hilfe zumindest eines der IST-Lenkwinkelsignale den einzustellenden SOLL-Lenkwinkel des anderen Rades ermitteln kann und mit Hilfe der Werte des IST-Lenkwinkels des anderen Rades und des SOLL-Lenkwinkels des anderen Rades das Ölvolumen und/oder den Öldruck der mittleren Ölkammer des Dreikammer-Hydraulikzylinders so regeln und/oder steuern kann, dass der IST-Lenkwinkel zumindest annähernd gleich dem SOLL-Lenkwinkel ist.

Grundsätzlich wäre es auch möglich, nur den IST-Lenkwinkel eines Rades bereitzustellen, daraus mit Hilfe der Steuerungseinrichtung einen SOLL-Lenkwinkel für das andere Rad zu ermitteln und diesen SOLL-Lenkwinkel im Sinne einer reinen Steuerung einzustellen. Die Verwendung beider IST-Lenkwinkel eröffnet jedoch die Möglichkeit einer Regelung der Stellung des anderen Rades an Stelle der Steuerung.

Nicht zuletzt ermöglicht diese Vorrichtung gemäß einer weiteren vorteilhaften Ausgestaltung, dass von der Steuerungseinrichtung als das zumindest eine IST-Lenkwinkelsignal das IST-Lenkwinkelsignal des jeweils kurveninneren Rades verwendet werden kann, wodurch sich automatisch ein symmetrisches Lenkverhalten für Linkskurven und Rechtskurven ergibt, welches ansonsten mit Hilfe von besonderen Anpassungsmodulen oder Verfahrensschritten erzwungen werden müsste.

Daneben ist es selbstverständlich auch möglich, jeweils den IST-Lenkwinkel des kurvenäußeren Rades als Bezugsgröße zu wählen. Tatsächlich ist es jedoch einfacher, das Rad mit dem stärkeren Lenkeinschlag als Ausgangsgröße zu setzen und einen geringem Lenkeinschlag des anderen Rades durch eine positive Längenänderung der dritten Ölkammer zu bewerkstelligen.

Schließlich ist es grundsätzlich auch möglich, den relevanten IST-Lenkwinkel aus einer gewichteten Berücksichtigung beider IST-Lenkwinkel, etwa durch Mittelwertbildung zu ermitteln.

Die mittels der mittleren Ölkammer einstellbare Längenänderung der Kolbenstange und die daraus folgende Abweichung der Winkel der gelenkten Räder einer Achse zueinander kann grundsätzlich für die verschiedensten Anlenkungen der Räder nutzbringend eingesetzt werden. Ein wesentlicher Vorteil gegenüber herkömmlichen Lenkgeometrien ohne die Möglichkeit einer Längenveränderung der Kolbenstange besteht gerade in ihrer möglichen, annähernd beliebigen Einstellbarkeit. In der Praxis ist es für viele Fälle jedoch besonders sinnvoll, wenn der Soll-Lenkwinkel der Ackermannwinkel ist. Auf diese Weise kann ein ideales Abrollen aller Räder ohne seitliches, durch Drehen um unterschiedliche Kurvenmittelpunkte verursachtes Gleiten sichergestellt werden. Der Verschleiß an Bereifung und Fahrwerk kann damit auf ein Minimum reduziert werden.

Wie bereits erwähnt ist es dabei durchaus sinnvoll, bereits durch die mechanische Auslegung der Lenkung bei konstantem Ölvolumen in der mittleren Ölkammer annähernd für die Einhaltung der Ackermann-Bedingung zu sorgen und die Variation der Füllmenge der mittleren Ölkammer lediglich für die Feineinstellung zu nutzen.

Daneben ist es jedoch für viele Fahrsituationen auch sinnvoll, die Winkel der Räder zueinander nicht exakt gemäß der Ackermannschen Bedingung einzustellen, sondern um eine Lenkwinkelabweichung zu korrigieren. Eine Lenkwinkelabweichung in Richtung auf ein geringfügiges auf einander Zulaufen der Räder kann beispielsweise die Spurführungswirkung des kurvenäußeren Rades vergrößern und dadurch das Fahrverhalten in schnell durchfahrenen Kurven verbessern. Ein wesentlicher Vorteil einer erfindungsgemäßen Vorrichtung besteht gerade darin, dass diese Lenkwinkelabweichung nicht mittels in der Werkstatt einzustellender Elemente fest eingestellt ist, sondern auch während des Betriebes geändert werden kann.

Dabei kann die Lenkwinkelabweichung mittels einer festgelegten Beziehung zwischen einem Lenkwinkel und der Lenkwinkelabweichung bestimmt werden. So kann die Lenkwinkelabweichung beispielsweise bei geringen Lenkwinkeln klein sein, da hier eine verbesserte Spurführung in der Regel nicht benötigt wird und dem Aspekt des verringerten Verschleißes eine größere Bedeutung zukommt.

Bei mittleren Lenkausschlägen kann die Lenkwinkelabweichung vergleichsweise groß sein, um eine maximale Spurstabilität zu gewährleisten, während diese bei sehr großen Lenkwinkeln, die praktisch nur bei geringen Geschwindigkeiten im Rangierbetrieb vorkommen, abermals klein sein kann, um den ansonsten recht starken Verschleiß an der Bereifung zu minimieren. Mit einer herkömmlichen Lenkgeometrie wäre ein solches Verhalten nur sehr aufwändig zu realisieren. Ob die Beziehungen dabei durch eine Tabelle, mit Hilfe einer mathematischen Formel oder auf andere Art festgelegt sind, ist dabei unerheblich.

Zur weiteren Feinabstimmung des Lenkungsverhaltens kann zumindest ein weiterer Parameter mit in die Bestimmung der Größe der Lenkwinkelabweichung einfließen.

Wenn dieser weiteren Parameter die Geschwindigkeit des Fahrzeugs ist, kann diese Geschwindigkeit an Stelle der obenstehend ausgeführten Mutmaßung der Geschwindigkeit aus dem Lenkeinschlag verwendet werden. Gerade bei großen Lenkeinschlägen bei vergleichsweise hohen Geschwindigkeiten ist eine Maximierung der Spurführungskräfte geboten. Weiter kann eine Drehzahldifferenz zwischen einer Drehzahl eines Rades auf einer Seite der Achse und eines Rades auf der anderen Seite der Achse dazu verwendet werden, ein einseitiges Durchrutschen eines Reifens festzustellen und beispielsweise den Lenkeinschlag dieses Rades weiter zu erhöhen, um trotz des Durchrutschens einen annähernd normalen Beitrag des Rads zur Spurführung anzustreben.

Daneben kann ein Wert für die Griffigkeit des Untergrundes dazu verwendet werden, um bei vereisten Straßen die Lenkwinkelabweichung anzupassen. Steht ein Wert für die Art des Untergrundes zur Verfügung, kann beispielsweise auf Sand eine höhere Abweichung vom Ackermannwinkel eingestellt werden als auf Asphalt, da auf Sand der Verschleiß durch Abrieb sehr viel kleiner ist. Schließlich kann ein Wert für einen Betriebsmodus beispielsweise eine Unterscheidung zwischen einem Baustellenmodus und eine Straßenmodus ermöglichen, wobei im Baustellenmodus der Fokus auf einer geringen Reifenabnutzung und im Straßenmodus auf optimaler Sicherheit durch maximale Spurführung liegen kann.

Schließlich wird es hinsichtlich der genannten Vorrichtung als vorteilhaft erachtet, wenn wenigstens ein, vorzugsweise zwei Anschlagmittel vorgesehen sind, welche die maximale Befüllung der mittleren Ölkammer begrenzt. Durch einen solchen Anschlag wird bei einem unerwünscht auftretenden Versagen der aktiven Kompensation die Lenkwinkelstellung der beiden gelenkten Räder zueinander so begrenzt, dass das Fahrzeug auch in einer solchen Notsituation lenkbar bleibt.

Im Folgenden wird das erfindungsgemäße Verfahren näher beschrieben.

Es handelt sich um ein Verfahren zur Ansteuerung der mittleren Ölkammer eines Dreikammer-Hydraulikzylinders zur Anlenkung von Rädern eines Fahrzeugs mit Achsschenkellenkung an zumindest einer Radachse, wobei eine Kolbenstange während des Betriebes mittels der mittleren Ölkammer eines Dreikammer-Hydraulikzylinders in der Länge veränderbar ist und an beiden Enden mit jeweils einer einem Rad der Fahrzeugachse zugeordneten Spurstange oder Achsschenkel gelenkig wirkverbunden ist.

Zur Lösung der gestellten Aufgabe ist vorgesehen, dass eine Erkennungsvorrichtung den IST-Lenkwinkel δ_{L}, δ_{R} der Räder auf beiden Seiten der Achse ermittelt, eine Sollwert-Ermittlungsvorrichtung unter Berücksichtigung des IST-Lenkwinkels δ_{L}, δ_{R} eines der Räder einen Soll-Lenkwinkel des anderen Rades ermittelt, und eine Steuer- und/oder Regeleinrichtung die Parameter zur Steuerung und/oder Regelung des Öldrucks und/oder des Ölvolumens in der mittleren Ölkammer des Dreikammer-Hydraulikzylinders in der Art steuert und/oder regelt, dass der IST-Lenkwinkel zumindest annähernd gleich dem SOLL-Lenkwinkel ist.

Auf diese Weise kann die Steuer- und/oder Regeleinrichtung auf der Grundlage des zuvor von der Sollwert-Ermittlungseinrichtung ermittelten Wertes die gezielte Befüllung bzw. Entlehrung der mittleren Ölkammer steuern und/oder regeln.

Wenn die Lenkung so ausgelegt ist bzw. so durchgeführt wird, dass sich bei einer kleinstmöglichen Füllung der mittleren Ölkammer eine Lenkwinkelabweichung im Sinne eines auf einander Zulaufens der Räder ergibt, ist im Betrieb stets auch die Möglichkeit gegeben, eine bereits weiter oben ausführlich beschriebenen Radeinstellung zur Verbesserung der Kurvenlage des Fahrzeugs einzustellen. Es ist aber auch möglich, dass die Lenkung so durchgeführt wird, dass bei einer kleinstmöglichen Füllung der mittleren Ölkammer und bei Geradeausfahrt des Fahrzeugs die gelenkten Räder parallel zueinander ausgerichtet sind.

Um sowohl bei Linkskurven als auch bei Rechtskurven bei gleichen Lenkwinkeln des Lenkrades gleiche Kurvenradien sicherzustellen, ist bevorzugt vorgesehen, dass die Sollwert-Ermittlungseinrichtung, welche unter Berücksichtigung des IST-Lenkwinkels eines der Räder einen Soll-Lenkwinkel des anderen Rades ermittelt, hierzu den IST-Lenkwinkel des kurveninneren Rades, also des Rades mit dem stärkeren Lenkeinschlag, verwendet. Grundsätzlich kann jedoch auch das kurvenäußere Rad als Bezugspunkt gewählt werden oder auch eine gewichtete Mittelung beider IST-Lenkwinkelwerte. Demnach kann auch vorgesehen sein, dass die Sollwert-Ermittlungseinrichtung, welche unter Berücksichtigung des IST-Lenkwinkels eines der Räder einen Soll-Lenkwinkel des anderen Rades ermittelt, hierzu den IST-Lenkwinkel des kurvenäußeren Rades verwendet.

Insbesondere für den Baustellenbetrieb oder für andere Betriebsweisen oder Fahrzeugeinsatzgebiete, bei denen ein geringer Verschleiß an Reifen und Fahrwerk höher bewertet wird als eine Verbesserung der Kurvenlage des Fahrzeugs bei höheren Geschwindigkeiten oder ein optimierter Geradeauslauf, soll dabei die Sollwert-Ermittlungseinrichtung den SOLL-Lenkwinkel so bestimmen, dass er gleich dem Ackermann-Winkel ist.

Wenn jedoch Erwägungen wie der optimierte Geradeauslauf oder eine Verbesserung der Kurvenlage eine Rolle spielen, ist es vorteilhaft, wenn die Sollwert-Ermittlungseinrichtung den SOLL-Lenkwinkel so bestimmt, dass er gleich dem Ackermann-Winkel korrigiert um eine gewollte Lenkwinkelabweichung ist.

Dabei kann in einer apparativ und rechentechnisch besonders einfachen Ausgestaltung die Sollwert-Ermittlungseinrichtung die Lenkwinkelabweichung mit Hilfe einer festgelegten Beziehung zwischen einem Lenkwinkel und der Lenkwinkelabweichung bestimmen. Hierfür bieten sich neben Look-Up-Tabellen auch mathematische Formeln an.

Noch bessere Fahreigenschaften können erreicht werden, wenn weitere Informationen mit zur Einstellung der Ölmenge in der mittleren Ölkammer hinzugezogen werden, indem die Sollwert-Ermittlungseinrichtung die Lenkwinkelabweichung mit Hilfe zumindest eines weiteren Parameters bestimmt. Im einfachsten Fall kann dies durch die Ablage zweier alternativer Look-Up-Tabellen bzw. mathematischer Formeln erreicht werden, zwischen denen mittels eines Schalters oder Tasters umgeschaltet werden kann.

Eine noch höherwertige Steuerung und/oder Regelung ergibt sich jedoch, wenn der zumindest eine weiteren Parameter die Geschwindigkeit des Fahrzeugs und/oder eine Drehzahldifferenz zwischen einer Drehzahl eines Rades auf einer Seite der Achse und eines Rades auf der anderen Seite der Achse und/oder ein Wert für die Griffigkeit des Untergrundes und/oder ein Wert für die Art des Untergrundes und/oder ein Wert für einen Betriebsmodus ist. Die grundsätzlichen Möglichkeiten der sinnvollen Auswertung dieser Parameter wurden bereits oben beschrieben.

Die Erfindung lässt sich anhand eines Ausführungsbeispiels weiter erläutern. Dazu ist der Beschreibung eine Zeichnung beigefügt. In diesen zeigt
- Fig. 1: eine allgemeine Prinzipskizze einer Lenkvorrichtung mit einer geteilten Kolbenstange,
- Fig. 2: eine prinzipielle Darstellung eines herkömmlichen Hydraulikzylinders und eines Dreikammer-Hydraulikzylinders, sowie
- Fig. 3: eine Prinzipskizze eines Steuerungsaufbaus zur Ansteuerung einer Lenkvorrichtung, ähnlich dem in Fig. 1 gezeigten Aufbau, jedoch mit einem Dreikammer-Hydraulikzylinder gemäß Fig. 2.

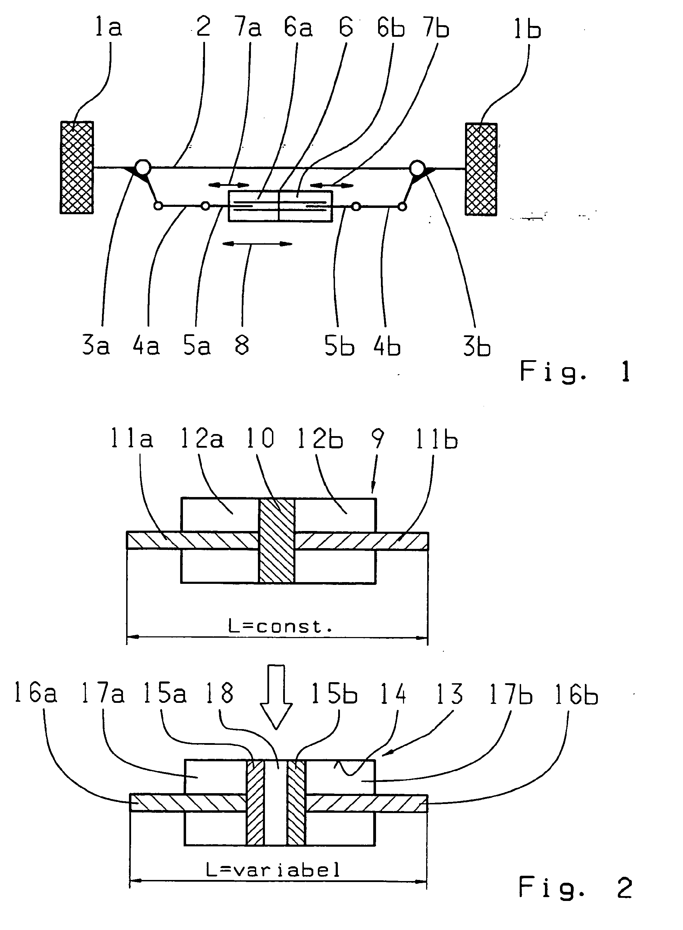

Fig. 1 zeigt demnach eine allgemeine Prinzipskizze einer Lenkvorrichtung mit einer geteilten Kolbenstange, die bereits in ähnlicher Form in der unveröffentlichten Patentanmeldung DE 2004 053 727 dargestellt ist. Hierbei werden die Räder 1 a, 1 b einer Achse 2 durch die Auslenkung von Achsschenkeln 3a, 3b verschwenkt. Die Achsschenkel 3a, 3b sind gelenkig mit der Achse 2 verbunden, können jedoch auch durch andere Maßnahmen jeweils an einem festen Punkt drehbar gelagert sein, wie dies bei üblichen Einzelradaufhängungen der Fall ist.

Die Achsschenkel 3a, 3b sind zudem gelenkig mit Spurstangen 4a, 4b verbunden, die ihrerseits durch Teilkolbenstangen 5a, 5b angelenkt werden. Die Stellung der Teilkolbenstangen, 5a, 5b wird über den Hauptlenkzylinder 6 eingestellt, welcher aus den Untereinheiten 6a und 6b besteht, die in diesem Fall zwei getrennt steuerbare Hydraulikzylinder sein können.

Aufgrund eines Lenksignals, das beispielsweise ein Fahrer eines Kraftfahrzeuges durch Drehen eines Lenkrades als Sollgröße vorgibt, werden im gezeigten Beispiel die Untereinheiten 6a, 6b des Hauptlenkzylinders 6 so angesteuert, dass sich eine seitliche Verschiebung der Teilkolbenstangen 5a, 5b ergibt, die über die Spurstangen 4a, 4b auf die Achsschenkel 3a, 3b wirken und zu einem entsprechenden Einschlag der Räder 1a, 1 b führen. Dabei muss sichergestellt sein, dass die Einzelverstellwege 7a, 7b der Teilkolbenstangen 5a, 5b jeweils in gleicher Richtung und in einem vorbestimmten Verhältnis erfolgen.

Sofern die Verstellwege 7a, 7b auch vom Betrag her gleich sind, ergibt sich das Verhalten einer Lenkung mit einer herkömmlichen, durchgehenden Kolbenstange, welche um einen durch den Pfeil der gemeinsamen Verschiebung 8 der Teilkolbenstangen 5a, 5b angedeuteten Betrag ausgelenkt wird. Durch die hinreichend bekannte Konstruktion aus Achsschenkeln 3a, 3b und Spurstangen 4a, 4b kann durch entsprechende mechanische Auslegung gewährleistet werden, dass dabei die Ackermannsche Bedingung zumindest annähernd erfüllt wird. Bei Bedarf lässt sich auch eine gewünschte Lenkwinkelabweichung einstellen. Bei einem System mit durchgehender Kolbenstange ist dieses Lenkverhalten jedoch mechanisch festgelegt und allenfalls in einer Werkstatt zu ändern.

Durch die Teilung des Hauptlenkzylinders 6 in zwei Untereinheiten 6a, 6b ist es dagegen möglich, den Einschlag der Räder 1 a, 1 b durch unterschiedliche Ansteuerung der Untereinheiten 6a, 6b so einzustellen, dass beispielsweise - bei gleicher Verstellrichtung - der Verstellweg 7a der linken Untereinheit 6a etwas größer als der Verstellweg 7b der rechten Untereinheit 7b ist.

Auf diese Weise kann je nach Ansteuerung entweder der Ackermannwinkel sehr exakt und über den gesamten möglichen Lenkeinschlag eingehalten werden, oder es können auch je nach Fahrsituation unterschiedliche Lenkwinkelabweichungen während des Fahrbetriebs eingestellt werden.

Eine solche Vorrichtung kann die an sie gestellten Anforderungen grundsätzlich erfüllen, erfordert jedoch aufgrund der beiden getrennt anzusteuernden Untereinheiten 6a, 6b eine recht komplizierte Ansteuerung, die beispielsweise ein leicht unterschiedliches Ansprechverhalten der beiden Untereinheiten mit berücksichtigen muss.

In Fig.2 ist eine prinzipielle Darstellung eines herkömmlichen Hydraulikzylinders und eines Dreikammer-Hydraulikzylinders abgebildet. Der für Lenkungen bislang allgemein eingesetzte herkömmliche Hydraulikzylinder 9 weist dabei einen einzelnen Kolben 10 auf, mit welchem auf beiden Seiten Kolbenstangen 11 a, 11 b fest verbunden und dichtend aus dem Zylinder nach außen geführt sind. An Stelle der beiden Teilkolbenstangen 11a und 11b kann hier auch eine durchgehende Kolbenstange verwendet werden, auf der ein Kolben mit einer entsprechenden Durchgangsbohrung befestigt ist. Da der Zylinder 9 von beiden Seiten aus mit unter Druck befindlichem Hydrauliköl befüllt werden kann, kann durch Einstellung der Ölmenge in den beiden Teilölkammern 12a, 12b die Position des Kolbens 10 und damit auch der Kolbenstangen 11 a, 11 b gesteuert werden. Der Abstand L der Kolbenstangenenden ist dabei konstant.

Erfindungsgemäß wird an Stelle des in Fig. 2 oben gezeigten Hauptlenkzylinders 9 jedoch der in Fig. 2 unten dargestellte Dreikammer-Hydraulikzylinder 13 verwendet. Dieser besteht aus einem Hydraulikzylinder mit durchgehender Zylinderbohrung 14, welche zwei getrennte Kolben 15a, 15b aufnimmt, die jeweils fest mit zu unterschiedlichen Seiten aus dem Hydraulikzylinder herausgeführten Teilkolbenstangen 16a, 16b verbunden sind. Unter einer durchgehenden Zylinderbohrung ist dabei ein im Berech der Verstellwege der beiden Kolben zumindest annähernd konstanter Querschnitt der den Kolben aufnehmenden Ausnehmung des Zylinders zu verstehen.

Die Position der Kolben 15a, 15b und damit auch der Kolbenstangen 16a, 16b innerhalb der Zylinderbohrung 14 bzw. der Abstand L der Kolbenstangenenden lässt sich in grundsätzlich bekannter weise durch Beaufschlagung der beiden äußeren Teilölkammem 12a, 12b und der mittleren Teilölkammer 18 mit Hydrauliköl einstellen. Dadurch können bei einem Dreikammer-Hydraulikzylinder die beiden Teilkolbenstangen 16a, 16b zumindest in gewissem Umfang einzeln verstellt werden, indem die Ölmenge in der mittleren Ölkammer 18 variiert wird. Während eine Veränderung der Ölmengen in den äußeren Teilölkammem 17a, 17b bei konstanter Ölmenge in der mittleren Teilölkammer 18 zu einer Verschiebung der Teilkolbenstangen 16a, 16b analog zum Verhalten der Teilkolbenstangen 11 a, 11 b führt, kann durch eine Veränderung der Ölmenge der mittleren Teilölkammer 18 die Länge zwischen den Endpunkten der Teilkolbenstangen 16a, 16b verändert werden.

Sollen die Räder 1 a, 1 b eines Fahrzeugs nun beispielsweise ausgehend von einer Geradeausstellung nach links eingeschlagen werden, so ist bei einer Anordnung in Anlehnung an Fig.1, jedoch mit dem zuvor beschriebenen Dreikammer-Hydraulikzylinder 13 aus Fig. 2, bei zunächst angenommenen konstantem Volumen der mittleren Teilölkammer 18 die Ölmenge in der linken Teilölkammer 17a in bekannter Weise entsprechend zu erhöhen, während die Ölmenge in der rechten Teilölkammer 17b entsprechend reduziert wird. Dadurch verschieben sich beide Teilkolben 15a, 15b um den gleichen Betrag und in gleicher Richtung. In soweit entspricht das Lenkverhalten dem einer Vorrichtung mit einem Hauptlenkzylinder 9 gemäß Fig. 2 oben.

Zusätzlich kann jedoch bei einem erfindungsgemäßen Aufbau mit einem Dreikammer-Hydraulikzylinder 13 die Ölmenge der mittleren Teilölkammer 18 variiert werden. Bevorzugt wird hierbei die Ölmenge der Teilölkammer 17a, welche der Teilkolbenstange 16a auf der Seite des jeweils kurveninneren Rades 1a zugeordnet ist, in Abhängigkeit von einem Lenksignal, beispielsweise vom Drehwinkel eines Lenkrades eingestellt. In diesem Beispiel ist dies die Teilölkammer 17a bzw. die Teilkolbenstange 16a. Auf diese Weise ist die Stellung des kurveninneren Rades 1a stets direkt abhängig vom Lenksignal bzw. von der Stellung des Lenkrades, womit sich ein für Links- und Rechtskurven symmetrisches Verhalten der Lenkung ergibt.

Die Stellung des jeweils kurvenäußeren Rades 1b ergibt sich aus der Ölmenge in der Teilölkammer 17b, welche der Teilkolbenstange 16b auf der Seite des kurvenäußeren Rades 1 b zugeordnet ist, und der Ölmenge in der mittleren Teilölkammer 18. Durch Regulierung dieser letztgenannten Ölmenge kann der relative Winkel der Räder 1a, 1 b der Achse zueinander eingestellt werden. Es ist dadurch auf einfache Weise möglich, wahlweise diesen Winkel über den gesamten Verschwenkbereich der Räder 1a, 1 b sehr genau entsprechend der Ackermannschen Bedingung einzustellen, oder auch eine gewünschte Lenkwinkelabweichung einzustellen. Hauptvorteil dieses Aufbaus ist es, dass die Lenkwinkelabweichung während des Betriebs des Fahrzeugs in weitem Umfang eingestellt werden kann, womit das Lenkverhalten für unterschiedliche Umgebungsbedingungen jeweils optimiert werden kann.

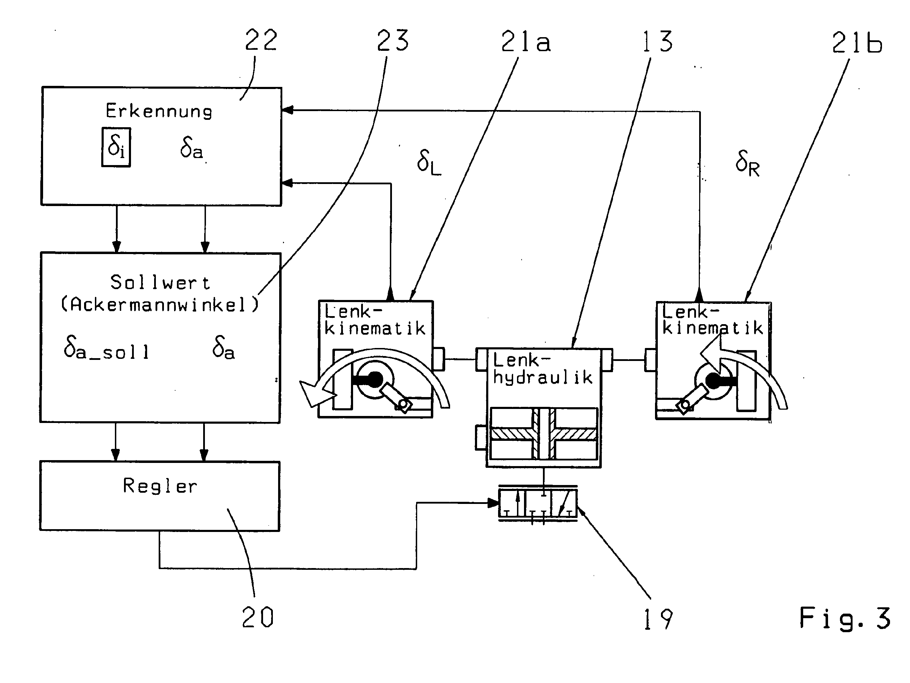

Fig. 3 zeigt eine Prinzipskizze eines Steuerungsaufbaus zur Ansteuerung einer Lenkvorrichtung ähnlich dem in Fig. 1 gezeigten Aufbau, jedoch mit einem Dreikammer-Hydraulikzylinder gemäß Fig. 2. Nicht für das Verständnis benötigte Einzelheiten sind dabei aus Gründen der Übersichtlichkeit weggelassen worden.

Dabei werden die Ölmengen der Teilölkammem 17a, 17b, 18, zumindest jedoch die Ölmenge der mittleren Teilölkammer 18 eines Dreikammer-Hydraulikzylinders 13 über eine von einem Fachmann auf diesem Gebiet leicht auslegbare Hydrauliksteuerventilanordnung 19 gemäß den Vorgaben eines Reglers 20 eingestellt. Die Lenkwinkel δ_{L} und δ_{R} des linken und rechten Rades 1 a, 1 b bzw. der Radachsen werden jeweils an einer geeigneten Stelle der Lenkkinematik 21 a, 21 b ermittelt. Dabei kann an Stelle der Lenkwinkel der Räder 1 a, 1 b oder Radachsen selbstverständlich auch jeder andere Winkel ermittelt werden, der zu den vorgenannten Winkeln in einem festen oder zumindest berechenbaren Verhältnis steht.

Die ermittelten Winkel δ_{L} und δ_{R} werden an eine Erkennungsvorrichtung 22 übermittelt, wo diese Werte bei Bedarf noch weiter aufbereitet werden können. Insbesondere kann hier festgestellt werden, welcher Lenkwinkel jeweils der kurveninnere Lenkwinkel δᵢ und welcher der kurvenäußere Lenkwinkel δₐ ist.

Diese Werte werden an eine Sollwert-Ermittlungseinrichtung 23 übergeben. Diese Sollwert-Ermittlungseinrichtung 23 ermittelt auf Basis des jeweils kurveninneren Lenkwinkels δᵢ den gewünschten kurvenäußeren Lenkwinkel δₐ. Im einfachsten Fall kann aus einer Tabelle zu einem Wert δᵢ ein korespondierender Wert δₐ ausgelesen werden. Es können jedoch auch Kennfelder oder Berechnungsvorschriften zur Anwendung kommen, mit Hilfe derer, bevorzugt unter Berücksichtigung weiterer Parameter, jeweils ein Lenkwinkel des kurvenäußeren Rades δₐ mit einer gewünschten Lenkwinkelabweichung ermittelt wird. Dabei können die ermittelten Lenkwinkel δₐ und δᵢ direkt an eine Regeleinrichtung 20 übergeben werden, welche die Hydraulikanordnung 19 ansteuert.

Alternativ können diese Lenkwinkel δₐ und δᵢ in der Sollwert-Ermittlungseinrichtung 23 in Parameter umgesetzt werden, die sich direkt zur Ansteuerung der Hydrauliksteuerventilanordnung 19 zur Einstellung der gewünschten Ölvolumina in den Teilölkammem des Dreikammer-Hydraulikzylinders 13 eignen. Überhaupt ist es in diesem Zusammenhang unerheblich, ob die einzelnen Funktionen in getrennten Modulen oder in einer integrierten Einheit ablaufen und an welcher Stelle der Datenaufbereitung jeweils eine Modulgrenze gezogen wird.

### Bezugszeichen

- 1a, 1b: Räder, links und rechts
- 2: Achse
- 3a, 3b: Achsschenkel, links und rechts
- 4a, 4b: Spurstangen, links und rechts
- 5a, 5b: Teilkolbenstangen, links und rechts
- 6: Hauptlenkzylinder
- 6a, 6b: Untereinheiten des Hauptlenkzylinders, links und rechts
- 7a, 7b: Verstellweg der Untereinheit (6a) und (6b)
- 8: gemeinsame Verschiebung der Teilkolbenstangen (5a, 5b)
- 9: Hauptlenkzylinder
- 10: Kolben
- 11a, 11b: Teilkolbenstangen, links und rechts
- 12a, 12b: Teilölkammern, links und rechts
- 13: Dreikammer-Hydraulikzylinder
- 14: durchgehende Zylinderbohrung
- 15a, 15b: Teilkolben, links und rechts
- 16a, 16b: Teilkolbenstangen, links und rechts
- 17a, 17b: äußere Teilölkammern, links und rechts
- 18: mittlere Teilölkammer
- 19: Hydrauliksteuerventilanordnung
- 20: Regeleinrichtung
- 21a, 21b: Lenkkinematik, links und rechts
- 22: Erkennungsvorrichtung
- 23: Sollwert-Ermittlungsvorrichtung
- δ_{L}, δ_{R}: Lenkwinkel des linken bzw. rechten Rades
- δᵢ, δₐ: Lenkwinkel des kurveninneren bzw. kurvenäußeren Rades
- L: Abstand der Kolbenstangenenden zueinander

## Patentansprüche

1. Vorrichtung zur Anlenkung von Rädern (1a, 1 b) eines Fahrzeugs mit Achsschenkellenkung an zumindest einer Radachse (2), wobei die Achsschenkellenkung mit einem Hauptlenkzylinder (6) ausgeführt ist, dessen Kolbenstange (5a, 5b) an beiden Enden mit jeweils einer einem Rad (1a, 1b) der Fahrzeugachse (2) zugeordneten Spurstange (4a, 4b) oder Achslenker (3a, 3b) gelenkig wirkverbunden ist, und bei der die Kolbenstange (5a, 5b) während des Betriebes des Fahrzeuges in der Länge veränderbar ist, wobei die Kolbenstange (5a, 5b) im Bereich des Hauptlenkzylinders (6) in zwei Teilkolbenstangen (5a, 5b) geteilt ist und der Hauptlenkzylinder (6) als Dreikammer-Hydraulikzylinder (13) ausgebildet ist, wobei die beiden äußeren Ölkammern (17a, 17b) zur Umsetzung eines Lenkwinkel-Sollsignals in einen Lenkwinkel der Räder (1a, 1b) der Achse (2) vorgesehen sind, und die mittlere Ölkammer (18) der Einstellung einer Abweichung zwischen den Lenkwinkeln der Räder auf unterschiedlichen Seiten der Achse (2) dient, **dadurch gekennzeichnet, dass** eine Steuerungseinrichtung zur Steuerung und/oder Regelung eines Ölvolumens und/oder Öldrucks in der mittleren Ölkammer vorgesehen ist, welcher ein Signal über den aktuellen IST-Lenkwinkel der gelenkten Räder (1a, 1b) der Achse (2) zuführbar ist, und dass eine Sollwert-Ermittlungs-einheit (23) vorgesehen ist, welcher zumindest eines der IST-Lenkwinkelsig-nale (δ_{L}, δ_{R}) zuführbar ist und die den einzustellenden SOLL-Lenkwinkel des anderen Rades ermitteln kann, und die mit Hilfe der Werte des IST-Lenkwin-kels (δ_{L}, δ_{R}) des anderen Rades und des SOLL-Lenkwinkels des anderen Rades das Ölvolumen und/oder den Öldruck der mittleren Ölkammer (18) des Dreikammer-Hydraulikzylinders (13) so zu regeln und/oder zu steuern in der Lage ist, dass der IST-Lenkwinkel (δ_{L} oder δ_{R}) zumindest annähernd gleich dem SOLL-Lenkwinkel ist.

2. Vorrichtung nach Anspruch 1, **dadurch gekennzeichnet, dass** die Lenkung so ausgelegt ist, dass sich bei einer kleinstmöglichen Füllung der mittleren Ölkammer (18) eine Lenkwinkelabweichung im Sinne eines auf einander Zulaufens der Räder (1a, 1b) ergibt,
oder dass bei einer kleinstmöglichen Füllung der mittleren Ölkammer (18) und bei Geradeausfahrt des Fahrzeugs die Räder (1a, 1b) parallel zueinander ausgerichtet sind.

3. Vorrichtung nach Anspruch 1 oder 2, **dadurch gekennzeichnet, dass** die Ölzuführung in die mittlere Ölkammer (18) des Hauptlenkzylinders (6) durch zumindest einen in zumindest einer Teilkolbenstange befindlichen Ölkanal erfolgt.

4. Vorrichtung nach Anspruch 1, **dadurch gekennzeichnet, dass** von der Steuerungseinrichtung als das zumindest eine IST-Lenkwinkelsignal (δ_{L}, δ_{R}) das IST-Lenkwinkelsignal des kurveninneren Rades (δᵢ) verwendet wird.

5. Vorrichtung nach Anspruch 1 oder 4, **dadurch gekennzeichnet, dass** der Soll-Lenkwinkel der Ackermannwinkel ist.

6. Vorrichtung nach Anspruch 1 oder 4, **dadurch gekennzeichnet, dass** der Soll-Lenkwinkel der Ackermannwinkel, korrigiert um eine Lenkwinkelabweichung ist.

7. Vorrichtung nach Anspruch 6, **dadurch gekennzeichnet, dass** die Lenkwinkelabweichung mit Hilfe einer festgelegten Beziehung zwischen einem Lenkwinkel und der Lenkwinkelabweichung bestimmt wird.

8. Vorrichtung nach Anspruch 6 oder 7, **dadurch gekennzeichnet, dass** die Lenkwinkelabweichung auf Grundlage zumindest eines weiteren Parameters bestimmt wird.

9. Vorrichtung nach Anspruch 8, **dadurch gekennzeichnet, dass** der zumindest eine weiteren Parameter die Geschwindigkeit des Fahrzeugs und/oder eine Drehzahldifferenz zwischen einer Drehzahl eines Rades (1 a, 1 b) auf einer Seite der Achse (2) und eines Rades (1 a, 1 b) auf der anderen Seite der Achse (2) und/oder ein Wert für die Griffigkeit des Untergrundes und/oder ein Wert für die Art des Untergrundes und/oder ein Wert für einen Betriebsmodus ist.

10. Vorrichtung nach wenigstens einem der Ansprüche 1 bis 9, **dadurch gekennzeichnet, dass** wenigstens ein Anschlagmittel vorgesehen ist, welches die maximale Befüllung der mittleren Ölkammer (18) begrenzt.

11. Verfahren zur Ansteuerung der mittleren Ölkammer (18) eines Dreikammer-Hydraulikzylinders (13) zur Anlenkung von Rädern (1a, 1 b) eines Fahrzeugs mit Achsschenkellenkung an zumindest einer Radachse (2), wobei eine Kolbenstange (5a, 5b) während des Betriebes mittels der mittleren Ölkammer (18) eines Dreikammer-Hydraulikzylinders (13) in der Länge veränderbar ist und an beiden Enden mit jeweils einer einem Rad (1a, 1b) der Fahrzeugachse (2) zugeordneten Spurstange (4a, 4b) oder Achsschenkel (3a, 3b) gelenkig wirkverbunden ist, **dadurch gekennzeichnet, dass** eine Erkennungsvorrichtung (22) den IST-Lenkwinkel (δ_{L}, δ_{R}) der Räder (1a, 1b) auf beiden Seiten der Achse (2) ermittelt, eine Sollwert-Ermittlungsvorrichtung (23) unter Berücksichtigung des IST-Lenkwinkels (δ_{L}, δ_{R}) eines der Räder (1a, 1b) einen Soll-Lenkwinkel des anderen Rades (1a, 1 b) bestimmt, und eine Steuer- und/oder Regeleinrichtung (20) die Parameter zur Steuerung und/oder Regelung des Öldrucks und/oder des Ölvolumens in der mittleren Ölkammer (18) des Dreikammer-Hydraulikzylinders (13) in der Art steuert und/oder regelt, dass der IST-Lenkwinkel zumindest annähernd gleich dem SOLL-Lenkwinkel ist.

12. Verfahren nach Anspruch 11, **dadurch gekennzeichnet, dass** die Lenkung so durchgeführt wird, dass sich bei einer kleinstmöglichen Füllung der mittleren Ölkammer (18) eine Lenkwinkelabweichung im Sinne eines auf einander Zulaufens der Räder (1a, 1b) ergibt,
oder dass bei einer kleinstmöglichen Füllung der mittleren Ölkammer (18) und bei Geradeausfahrt des Fahrzeugs die Räder (1a, 1 b) parallel zueinander ausgerichtet sind.

13. Verfahren nach Anspruch 11 oder 12, **dadurch gekennzeichnet, dass** die Sollwert-Ermittlungseinrichtung (23), welche unter Berücksichtigung des IST-Lenkwinkels (δ_{L}, δ_{R}) eines der Räder (1a, 1b) einen Soll-Lenkwinkel des anderen Rades (1a, 1 b) ermittelt, hierzu den IST-Lenkwinkel (δ_{L}, δ_{R}) des kurveninneren Rades (δᵢ) verwendet.

14. Verfahren nach Anspruch 11 oder 12, **dadurch gekennzeichnet, dass** die Sollwert-Ermittlungseinrichtung (23), welche unter Berücksichtigung des IST-Lenkwinkels (δ_{L}, δ_{R}) eines der Räder (1a, 1b) einen Soll-Lenkwinkel des anderen Rades (1a, 1b) ermittelt, hierzu den IST-Lenkwinkel (δ_{L}, δ_{R}) des kurvenäußeren Rades (δᵢ) verwendet.

15. Verfahren nach einem der Ansprüche 11 bis 14, **dadurch gekennzeichnet, dass** die Sollwert-IErmittlungseinrichtung (23) den SOLL-Lenkwinkel so bestimmt, dass er gleich dem Ackermann-Winkel ist.

16. Verfahren nach einem der Ansprüche 11 bis 14, **dadurch gekennzeichnet, dass** die Sollwert-Ermittlungseinrichtung (23) den SOLL-Lenkwinkel so bestimmt, dass er gleich dem Ackermann-Winkel korrigiert um eine Lenkwinkelabweichung ist.

17. Verfahren nach Anspruch 16, **dadurch gekennzeichnet, dass** die Sollwert-Ermittlungseinrichtung (23) die Lenkwinkelabweichung mit Hilfe einer festgelegten Beziehung zwischen einem Lenkwinkel und der Lenkwinkelabweichung bestimmt.

18. Verfahren nach Anspruch 16 oder 17, **dadurch gekennzeichnet, dass** die Sollwert-Ermittlungseinrichtung (23) die Lenkwinkelabweichung mit Hilfe zumindest eines weiteren Parameters bestimmt.

19. Verfahren nach Anspruch 18, **dadurch gekennzeichnet, dass** der zumindest eine weiteren Parameter die Geschwindigkeit des Fahrzeugs und/oder eine Drehzahldifferenz zwischen einer Drehzahl eines Rades (1a, 1 b) auf einer Seite der Achse (2) und eines Rades (1a, 1 b) auf der anderen Seite der Achse (2) und/oder ein Wert für die Griffigkeit des Untergrundes und/oder ein Wert für die Art des Untergrundes und/oder ein Wert für einen Betriebsmodus ist.

## Claims

1. Device for the control of the wheels (1 a, 1 b) of a vehicle with knuckle-pin steering on at least one wheel axle (2), with this knuckle-pin steering featuring a main steering cylinder (6), the piston rod (5a, 5b) of which is actively linked on both ends to a tie rod (4a, 4b) or steering knuckle (axle link) (3a, 3b) assigned to a wheel (1a, 1 b) of the vehicle axle (2), and with this piston rod (5a, 5b) being variable in its length during operation of the vehicle, and with this piston rod (5a, 5b) being split into two partial piston rods (5a, 5b) in the area of the main steering cylinder (6), and with this main steering cylinder (6) being designed as a triple-chamber hydraulic cylinder (13), with the two outer oil chambers (17a, 17b) being provided for conversion of a steering-angle nominal signal into a steering angle of the wheels (1a, 1 b) of the axle (2), and with the central oil chamber (18) being provided for the setting of a deviation between the steering angles of the wheels on different sides of the axle (2), **characterized in that** a control device is provided for closed-loop and/or open-loop control of an oil volume and/or oil pressure in the central oil chamber, which can be fed with a signal about the current ACTUAL steering angle of the steered wheels (1a, 1 b) of the axle (2), and that a nominal value determination unit (23) is provided which can be fed with at least one of the ACTUAL steering-angle signals (δ_{L}, δ_{R}) and which can determine the NOMINAL steering angle to be set on the other wheel, and which can use the values of the ACTUAL steering angle (δ_{L}, δ_{R}) and of the NOMINAL steering angle of the other wheel for closed-loop and/or open-loop control of the oil volume and/or the oil pressure in the central oil chamber (18) of the triple-chamber hydraulic cylinder (13) in such a manner that the ACTUAL steering angle (δ_{L} or δ_{R}) is at least approximately equivalent to the NOMINAL steering angle.

2. Device according to claim 1, **characterized in that** the design of the steering system is such that the least-possible filling of the central oil chamber (18) results in a steering-angle deviation with converging wheels (1a, 1 b), or that the least-possible filling of the central oil chamber (18) and straight-ahead driving results in the wheels (1a, 1 b) being aligned parallel to each other.

3. Device according to claim 1 or 2, **characterized in that** the oil supply to the central oil chamber (18) of the main steering cylinder (6) takes place through at least one oil duct in at least one partial piston rod.

4. Device according to claim 1 , **characterized in that** the control device uses the ACTUAL steering-angle signal of the inside wheel (δᵢ) as at least one ACTUAL steering-angle signal (δ_{L}, δ_{R}).

5. Device according to claim 1 or 4, **characterized in that** the nominal steering angle is the Ackermann angle.

6. Device according to claim 1 or 4, **characterized in that** the nominal steering angle is the Ackermann angle corrected by a steering-angle deviation.

7. Device according to claim 6, **characterized in that** the steering-angle deviation is determined with the aid of a defined relationship between a steering angle and the steering-angle deviation.

8. Device according to claim 6 or 7, **characterized in that** the steering-angle deviation is determined on the basis of at least one additional parameter.

9. Device according to claim 8, **characterized in that** the additional parameter is the speed of the vehicle and/or a speed differential between the speed of a wheel (1 a, 1 b) on one side of the axle (2) and of a wheel (1 a, 1 b) on the other side of the axle (2), and/or a value for the skid resistance of the surface, and/or a value for the type of surface, and/or a value for an operating mode.

10. Device according to at least one of the claims 1 thru 9, **characterized in that** at least one stop device is provided to limit maximum filling of the central oil chamber (18).

11. Method for the control of the central oil chamber (18) of a triple-chamber hydraulic cylinder (13) for the control of wheels (la, 113) of a vehicle with knuckle-pin steering on at least one wheel axis (2), with a piston rod (5a, 5b) being variable in its length during operation by means of the central oil chamber (18) of a triple-chamber hydraulic cylinder (13) and being actively linked on both ends to a tie rod (4a, 4b) or steering knuckle (3a, 3b) assigned to a wheel (1a, 1 b) of the vehicle axle (2), **characterized in that** a detection device (22) determines the ACTUAL steering angle (δ_{L}, δ_{R}) of the wheels (1a, 1 b) on both sides of the axle (2), a nominal value determination device (23) determines a nominal steering angle of the other wheel (1a, 1 b) considering the ACTUAL steering angle (δ_{L}, δ_{R}) of one of the wheels (1a, 1 b), and a closed-loop and/or open-loop control device (20) controls the parameters for closed-loop and/or open-loop control of the oil pressure and/or the oil volume in the central oil chamber (18) of the triple-chamber hydraulic cylinder (13) in such a manner that the ACTUAL steering angle is at least approximately equivalent to the NOMINAL steering angle.

12. Method according to claim 11, **characterized in that** steering is performed in such a manner that a least-possible filling of the central oil chamber (18) results in a steering-angle deviation with converging wheels (1a, 1 b), or that a least-possible filling of the central oil chamber (18) and straight-ahead driving results in the wheels (1a, 1 b) being aligned parallel to each other.

13. Method according to claim 11 or 12, **characterized in that** the nominal value determination device (23), which on the basis of the ACTUAL steering angle (δ_{L}, δ_{R}) of one of the wheels (1a, 1 b) determines a nominal steering angle of the other wheel (1 a, 1 b), uses the ACTUAL steering angle (δ_{L}, δ_{R}) of the inside wheel (δᵢ) to do this.

14. Method according to claim 11 or 12, **characterized in that** the nominal value determination device (23), which on the basis of the ACTUAL steering angle (δ_{L}, δ_{R}) of one of the wheels (1a, 1 b) determines a nominal steering angle of the other wheel (1a, 1 b), uses the ACTUAL steering angle (δ_{L}, δ_{R}) of the outside wheel (δᵢ) to do this.

15. Method according to one of the claims 11 thru 14, **characterized in that** the nominal value determination device (23) determines the NOMINAL steering angle in such a manner that it is equivalent to the Ackermann angle.

16. Method according to one of the claims 11 thru 14, **characterized in that** the nominal value determination device (23) determines the NOMINAL steering angle in such a manner that it is equivalent to the Ackermann angle corrected by a steering-angle deviation.

17. Method according to claim 16, **characterized in that** the nominal value determination device (23) determines the steering-angle deviation with the aid of a defined relationship between a steering angle and the steering-angle deviation.

18. Method according to claim 16 or 17, **characterized in that** the nominal value determination device (23) determines the steering-angle deviation with the aid of at least one additional parameter.

19. Method according to claim 18, **characterized in that** the additional parameter is the speed of the vehicle, and/or a differential speed between the speed of a wheel (1 a, 1 b) on one side of the axle (2) and a wheel (1a, 1 b) on the other side of the axle (2), and/or a value for the skid resistance of the surface, and/or a value for the type of surface, and/or a value for the operating mode.

## Revendications

1. Dispositif pour diriger des roues (1 a, 1 b) d'un véhicule avec une direction à fusée sur au moins un essieu de roue (2), sachant que la direction à fusée est réalisée avec un cylindre de direction principal (6), dont la tige de piston (5a, 5b) est liée activement des deux extrémités et à l'aide de joints à respectivement une barre d'accouplement (4a, 4b) ou un guide d'essieu (3a, 3b) associés à une roue (1 a, 1 b) de l'essieu du véhicule (2), et dont la tige de piston (5a, 5b) peut être variée en longueur pendant le fonctionnement du véhicule, sachant que la tige de piston (5a, 5b) est divisée en deux tiges de piston partielles (5a, 5b) dans la zone du cylindre de direction principal (8) et que le cylindre de direction principal (6) est réalisé comme cylindre hydraulique à trois chambres (13), sachant que les deux chambres d'huile externes (17a, 17b) sont prévues pour la conversion d'un signal de consigne d'un angle de braquage en un angle de braquage des roues (1 a, 1 b) de l'essieu (2), et que la chambre d'huile médiane (18) est utilisée pour le réglage d'un écart entre les angles de braquage des roues de différents côtés de l'essieu (2), **caractérisé en ce que** est prévu un dispositif de commande pour la commande et/ou le réglage d'un débit d'huile et/ou d'une pression d'huile dans la chambre d'huile médiane, auquel peut être envoyé un signal sur l'angle de braquage réel des roues dirigées (1 a, 1 b) de l'essieu (2), et **en ce que** est prévue une unité de détermination de la valeur de consigne (23), à laquelle peut être envoyé au moins un des signaux de l'angle de braquage réel (δ_{L}, δ_{R}) et qui pourra déterminer l'angle de braquage de consigne à régler sur l'autre roue, et qui - à l'aide des valeurs de l'angle de braquage réel (δ_{L}, δ_{R}) de l'autre roue et de l'angle de braquage de consigne de l'autre roue - est en état de régler et/ou de piloter le débit d'huile et/ou la pression d'huile de la chambre d'huile médiane (18) du cylindre hydraulique à trois chambres (13) de manière à ce que l'angle de braquage réel (δ_{L} ou δ_{R}) est au moins quasi-identique à l'angle de braquage de consigne.

2. Dispositif selon la revendication 1, **caractérisé en ce que** la direction est conçue de manière à ce que en cas d'un remplissage minime de la chambre d'huile médiane (18) résulte un écart de l'angle de braquage et donc un rapprochement des roues (1 a, 1 b), ou à ce que en cas d'un remplissage minime de la chambre d'huile médiane (18) et une conduite rectiligne du véhicule, les roues (1 a, 1 b) sont disposées de manière paralléle les unes par rapport aux autres.

3. Dispositif selon la revendication 1 ou 2, **caractérisé en ce que** l'amenée d'huile dans la chambre d'huile médiane (18) du cylindre de direction principal (6) est effectuée par au moins un canal d'huile disposé dans au moins une tige de piston partielle.

4. Dispositif selon la revendication 1, **caractérisé en ce que** par le dispositif de commande est utilisé en tant que le au moins un signal de braquage réel (δ_{L}, δ_{R}) le signal de braquage réel de la roue intérieure au virage (δᵢ).

5. Dispositif selon la revendication 1 ou 4, **caractérisé en ce que** l'angle de braquage de consigne est l'angle d'Ackermann.

6. Dispositif selon la revendication 1 ou 4, **caractérisé en ce que** l'angle de braquage de consigne est l'angle d'Ackermann corrigé d'un écart angulaire.

7. Dispositif selon la revendication 6, **caractérisé en ce que** l'écart angulaire est déterminé à l'aide d'une relation définie entre un angle de braquage et l'écart angulaire.

8. Dispositif selon la revendication 6 ou 7, **caractérisé en ce que** l'écart angulaire est déterminée sur la base d'au moins un autre paramètre.

9. Dispositif selon la revendication 8, **caractérisé en ce que** l'au moins un autre paramètre est la vitesse du véhicule et/ou une différence de régime entre un régime d'une roue (1 a, 1 b) d'un côté de l'essieu (2) et d'une roue (1 a, 1 b) de l'autre côté de l'essieu (2) et/ou une valeur d'adhérence du sol et/ou une valeur pour le type de sol et/ou une valeur pour un mode de fonctionnement.

10. Dispositif selon au moins une des revendications 1 à 9, **caractérisé en ce que** est prévu au moins un moyen de butée, celui-ci liminant le remplissage maximal de la chambre d'huile médiane (18).

11. Procédé de pilotage de la chambre d'huile médiane (18) d'un cylindre hydraulique à trois chambres (13) pour diriger des roues (1 a, 1b) d'un véhicule avec une direction à fusée sur au moins un essieu de roue (2), sachant que, pendant le fonctionnement, une tige de piston (5a, 5b) peut être variée en longueur au moyen de la chambre d'huile médiane (18) d'un cylindre hydraulique à trois chambres (13) et qu'elle est liée activement des deux extrémités et à l'aide de joints à respectivement une barre d'accouplement (4a, 4b) ou un guide d'essieu (3a, 3b) associés à une roue (1 a, 1 b) de l'essieu du véhicule (2), **caractérisé en ce que** un dispositif de reconnaissance (22) détermine l'angle de braquage réel (δ_{L}, δ_{R}) des roues (1 a, 1 b) des deux côtés de l'essieu (2), un dispositif de détermination de la valeur de consigne (23) détermine - en tenant compte de l'angle de braquage réel (δ_{L}, δ_{R}) d'une des roues (1a, 1b) - un angle de braquage de consigne de l'autre roue (1 a, 1 b), et **en ce que** un dispositif de commande et/ou de réglage (20) commande et/ou règle les paramètres de commande et/ou de réglage de la pression d'huile et/ou du débit d'huile dans la chambre d'huile médiane du cylindre hydraulique à trois chambres (13) de manière à ce que l'angle de braquage réel et au moins quasi-identique à l'angle de braquage de consigne.

12. Procédé selon la revendication 11, **caractérisé en ce que** le braquage est réalisé de manière à ce que en cas d'un remplissage minime de la chambre d'huile médiane (18) résulte un écart de l'angle de braquage et donc un rapprochement des roues (1a, 1b), ou à ce que en cas d'un remplissage minime de la chambre d'huile médiane (18) et une conduite rectiligne du véhicule, les roues (1a, 1b) sont disposées de manière paralléle les unes par rapport aux autres.

13. Procédé selon la revendication 11 ou 12, **caractérisé en ce que** le dispositif de détermination de la valeur de consigne (23), celui-ci déterminant, en tenant compte de l'angle de braquage réel (δ_{L}, δ_{R}) d'une des roues (1 a, 1 b), un angle de braquage de consigne de l'autre roue (1 a, 1 b), utilise à cet effet l'angle de braquage réel (δ_{L}, δ_{R}) de la roue intérieure au virage (δᵢ).

14. Procédé selon la revendication 11 ou 12, **caractérisé en ce que** le dispositif de détermination de la valeur de consigne (23), celui-ci déterminant, en tenant compte de l'angle de braquage réel (δL, δR) d'une des roues (1 a, 1 b), un angle de braquage de consigne de l'autre roue (1 a, 1 b), utilise à cet effet l'angle de braquage réel (δL, δR) de la roue extérieure au virage (δi).

15. Procédé selon une des revendications 11 à 14, **caractérisé en ce que** le dispositif de détermination de la valeur de consigne (23) détermine l'angle de braquage de consigne de manière à ce qu'il soit identique à l'angle d'Ackermann.

16. Procédé selon une des revendications 11 à 14, **caractérisé en ce que** le dispositif de détermination de la valeur de consigne (23) détermine l'angle de braquage de consigne de manière à ce qu'il soit identique à l'angle d'Ackermann corrigé d'un écart angulaire.

17. Procédé selon la revendication 16, **caractérisé en ce que** le dispositif de détermination de la valeur de consigne (23) détermine l'écart angulaire à l'aide d'une relation définie entre un angle de braquage et l'écart angulaire.

18. Procédé selon la revendication 16 ou 17, **caractérisé en ce que** le dispositif de détermination de la valeur de consigne (23) détermine l'écart angulaire à l'aide d'au moins un autre paramètre.

19. Procédé selon la revendication 18, **caractérisé en ce que** l'au moins un autre paramètre est la vitesse du véhicule et/ou une différence de régime entre un régime d'une roue (1 a, 1 b) d'un côté de l'essieu (2) et d'une roue (1 a, 1 b) de l'autre côté de l'essieu (2) et/ou une valeur d'adhérence du sol et/ou une valeur pour le type de sol et/ou une valeur pour un mode de fonctionnement.
